# EUROPÄISCHE PATENTSCHRIFT

(11) **EP 2 609 586 B1**
(45) Veröffentlichungstag und Bekanntmachung des Hinweises auf die Patenterteilung: **09.01.2019**
(21) Anmeldenummer: 11702601.3
(22) Anmeldetag: 28.01.2011
(51) Int. Cl.: G10K 11/00, G10K 11/16

(54) **BREITBANDIGER SCHALLABSORBER**
BROADBAND SOUND ABSORBER
ABSORBEUR DE SONS À LARGE BANDE

(30) Priorität: 25.08.2010 DE 102010035431
(43) Veröffentlichungstag der Anmeldung: 03.07.2013
(73) Patentinhaber: Adler Pelzer Holding GmbH, 58454 Witten (DE)
(72) Erfinder: SCHNEIDER, Marco, 45239 Essen (DE); JÄGER, Dirk, 44267 Dortmund (DE); KURSCH, Volker, 45141 Essen (DE); SUMANN, Edmund, Witten 58456 (DE); NICOLAI, Norbert, 46514 Schernbeck-Gahlen (DE); SCHULZE, Volkmar, 84069 Schierling (DE)
(74) Vertreter: dompatent von Kreisler Selting Werner - Partnerschaft von Patent- und Rechtsanwälten mbB
(86) Internationale Anmeldenummer: PCT/EP2011/051240
(87) Internationale Veröffentlichungsnummer: WO 2012/025253

(56) Entgegenhaltungen:
- EP-A1- 1 296 832
- DE-A1- 10 022 902
- DE-A1- 10 311 421
- DE-A1-102004 052 328
- DE-A1-102008 017 357
- DE-U1- 9 404 621
- DE-U1- 29 501 501

## Beschreibung

Die Erfindung betrifft einen breitbandigen Schallabsorber, welcher ein gegebenenfalls Schwerfüllstoff enthaltendes schallabsorbierendes Füllstoffmaterial zwischen zwei sich randumlaufend berührenden mikroperforierten Folienbahnen umfasst.

Ein niedriger Schallpegel im Fahrzeuginnenraum trägt zu einem entspannten Fahrgefühl und damit zur erhöhten passiven Sicherheit eines Kraftfahrzeugs bei. Zur Verringerung von Luftschall sind die physikalischen Grundprinzipien der Absorption und der Isolation bekannt. Eine optimale Lösung, die sich für jeden Anwendungsfall unterscheiden kann, stellt die Kopplung beider Systeme dar.

Geeignete Werkstoffkombinationen werden beispielsweise für Fahrzeugteppiche/Bodenverkleidungssysteme, Stirnwandmodule oder im Dachhimmel verwendet und tragen essentiell zur Minderung der Geräuschkulisse im Fahrzeuginnenraum bei.

Bauteile, die eine Isolation bewirken, haben einen geschlossenen Aufbau, das heißt keinen Schall- oder Luftdurchgang; sie sind am effektivsten in einem Masse- Feder- Aufbau. Ein solches System umfasst neben einer biegeweichen Schwerschicht auch eine elastische, weiche absorptive Unterschicht. Die elastische Schicht bewirkt eine teilweise schwingungstechnische Entkopplung der einzelnen Elemente und somit eine Reduktion der Geräuschkulisse. Die Isolation wird bestimmt durch die Masse einer Schwerschicht und durch die Federsteifigkeit einer Absorptivschicht.

Eine gute Schallabsorption ist jedoch nicht nur im Fahrzeugbau erforderlich. Auch in der Luft- und Raumfahrttechnik, im Schienenverkehr, bei der Herstellung Weißer Ware oder im Hausbau ist diese wichtig. Ein Schallabsorber für diese Anwendungszwecke muss so optimiert sein, dass durch die Wahl geeigneter Materialien Schall in einem bestimmten Frequenzbereich, der je nach Anwendung variiert, absorbiert wird.

Im Stand der Technik sind insbesondere aus dem Kraftfahrzeugbereich Schallabsorber aus Fasermaterialien, die in gebundener Form beispielsweise als Vliese Anwendung finden, bekannt. Als Fasern kommen dabei neben Naturfasern auch Polymere, anorganische oder metallische Fasern zum Einsatz. So ist in EP 1 182 087 A2 ein Absorber beschrieben, welcher Cellulosefasern und ein künstliches Harz umfasst. In EP 0 909 680 A1 werden Polyesterfasern als Schallabsorber eingesetzt. Der Durchmesser der verwendeten Fasern, die Dicke, und der Luftwiderstand bestimmen den Wirkungsgrad und den Frequenzbereich, in welchem der Schall absorbiert wird.

DE 20 2004 009 726 U1 umfasst eine schallabsorbierende, selbsttragende Stirnwandverkleidung für Kraftfahrzeuge zur Abschirmung der Fahrgastzelle gegenüber dem Motorraum, mit einem aus zumindest bereichsweise verpresstem Vliesmaterial gebildetem Schallabsorber, der dadurch gekennzeichnet ist, dass er mit einem Kunststoffrahmen versehen ist, der durch Hinterspritzen oder Hinterpressen des verpressten Vliesmaterials gebildet ist und mindestens ein integriertes Befestigungsmittel aufweist.

Anstatt faseriger Werkstoffe sind die gleichen oder ähnlichen Bauteile auch aus Schäumen, bevorzugt PUR oder Melamin mit unterschiedlichen Dichten bekannt.

Der als Feder-Masse beschriebene Aufbau ist aus der Literatur mit unterschiedlichen Materialien für die Schwerschicht (PUR-, PE/EVA-, EPDM- und allg. TPO- basierte Schwerschichten) bekannt; die als Folie tiefgezogen, geschäumt, spritzgegossen, gesprüht, hintervliest oder hinterschäumt werden.

Eine leichte, schallisolierende Verkleidung für ein Karosserieteil eines Kraftfahrzeuges und ein Verfahren zu deren Herstellung ist in DE 10 2007 020 832 A1 beschrieben. Die Verkleidung, welche insbesondere in Form einer leichten Stirnwandverkleidung beschrieben wird, umfasst eine Schallabsorberschicht, eine mit der Schallabsorberschicht direkt verbundene, im Wesentlichen luftdichte Schalldämmschicht und eine sich daran anschließende Schaumstoffschicht, wobei die Schallabsorberschicht aus einem porösen Absorber, vorzugsweise einem Faservlies oder Schaumstoff, gebildet ist. Die Schalldämmschicht besteht aus einer integralen, mindestens 0,5 mm dicken Hautschicht der Schaumstoffschicht und ist durch Hinterschäumen des porösen Absorbers, im Wesentlichen ohne Schaumdurchschlag, mit dem porösen Absorber stoffschlüssig verbunden.

Ein Fahrzeuginnenteil aus Kunststoff, welches auch eine Schalldämmung aufweist, ist aus DE 34 48 259 C2 bekannt. Das Kunststoffinnenteil beinhaltet Polyolefin und/oder Polystyrol, Synthesekautschuk und Füllstoff.

Wird ein Schaumstoff als Schallabsorber verwendet, so werden auch hier häufig vorgeformte Bauteile hergestellt. Diese sind in ihrer Zusammensetzung so optimiert, dass Sie für die entsprechende Position im Fahrzeug die benötigte frequenzbezogene Schallabsorption aufweisen.

DE 20 2004 008 165 U1 beschreibt ein schallisolierendes Bauteil aus einem hochgefüllten thermoplastischen Elastomer auf Basis von Styrol. Das schallisolierende Bauteil eignet sich insbesondere für Getriebetunnel- und/oder Stirnwandverkleidungen und weist außerdem Füllstoffe auf.

Ein Mehrschichtabsorber nach dem akustischen Feder-Masse-System wird in DE 199 09 046 A1 beschrieben. Die als Masse dienende Schwerschicht wird in unterschiedlichen Schichtdicken und/oder mit unterschiedlichen Flächengewichten pro Flächeneinheit in situ an der als Feder dienenden porösen Weichschicht appliziert, insbesondere aufgesprüht, aufgespritzt oder über eine Breitschlitzdüse aufgelegt.

DE 10 2004 054 646 A1 betrifft eine leichte schallisolierende Verkleidung für ein Karosserieteil eines Kraftfahrzeuges, insbesondere in Form einer Stirnwandverkleidung, sowie ein Verfahren zur Herstellung einer solchen Verkleidung. Die Verkleidung weist eine formgeschäumte Schalldämmschicht aus Polyurethanschaum und eine formgeschäumte schallabsorbierende Schicht aus offenzelligem Polyurethan-Weichschaum auf.

Ein Schallisolationsteil, insbesondere für Kraftfahrzeuge mit mindestens einer schallabsorbierenden Schicht und mindestens einer damit unmittelbar stoffschlüssig verbundenen Schwerschicht sowie Verfahren zu dessen Herstellung sind in DE 10 2005 056 840 B3 beschrieben. In einem entsprechenden Schallisolationsteil ist die Schwerschicht als mikroporöse Sprühhaut ausgebildet, und zwar so, dass sie mindestens einen luftdurchlässigen Teilflächenbereich und mindestens einen luftundurchlässigen Teilflächenbereich aufweist.

In DE 10 2004 037 767 A1 wird ein Schallisolator für einen Fahrgastraum eines Fahrzeuges beschrieben. Bei einem entsprechendem Schallisolator ist ein Luftkissen aus einer dämpfungsaktiven Hülle aus einem elastischen Material zwischen einem schallaussendenden Bauteil und dem Innenraum eine der Form des Bauteils angepasste und als Feder-Masse-System wirkende Schalldämpfungsschicht vorgesehen, die Innenraum-seitig mit einer Schwerfolie abgeschlossen ist, welche eine erste Schale des Luftkissens bildet, und eine mit der Schwerfolie dichtend verbundene zweite Schale des Luftkissens aus einer elastischen, vorzugsweise vorgeformten Folie vorgesehen ist, wobei zwischen der ersten und der zweiten Schale eine Luftpolster besteht.

DE 103 24 257 B3 umfasst einen Schallabsorber, welcher aus zwei miteinander verbundenen thermoplastisch und/oder duroplastisch gebundenen Textilfaservliesen besteht. Die beiden Textilfaservliese weisen unterschiedliche Schichtdicken und Dichten, zur Verbesserung der Schallabsorption, auf.
Eine Sonderform von Absorbern stellen offene 2-lagige Absorber dar, in denen sich die Strömungswiderstände und damit die Impedanz beider Lagen unterscheiden.

Im Allgemeinen versteht man hierunter die Kombination von zwei Schichten; bekannt sind Vlies/Vlies, Vlies/Schaum und Schaum/Schaum mit unterschiedlichem Luftströmungswiderstand. Die akustische Performance basiert auf der Balance zwischen Absorption und Isolation, siehe beispielsweise DE 103 24 257 B3; EP 0 934 180 B2 (WO 98/18657; WO 98/18656; US 6 145 617; WO 99/44817

In der DE 197 54 107 C1 und dem hier referierten Stand der Technik wird das Absorptionsverhalten mikroperforierter Bauteile untersucht. Es werden hier aus mikroperforierten Folien geschichtet aufgebaute Baffle-Strukturen untersucht, die als Kompaktabsorber von einer Decke oder einem Dach abhängen. Die mikroperforierten Folien sind geeignet, einseitig oder beidseitig, senkrecht, schräg oder streifend auftreffende Schallwellen aus dem Raum, insbesondere bei höheren Frequenzen, sehr wirkungsvoll zu absorbieren.

Aus dem Stand der Technik sind Bauteile für den Einsatz in Kraftfahrzeugen bekannt, die neben einer oder zwei mikrogelochten Folien mit faserigen oder schaumigen Absorbern hinter einer Folie oder zwischen beiden Folien liegen, beispielhaft sei auf die folgenden Schriften verwiesen: DE 100 22 902 A1, DE 10 2005 041 707 A1, DE 296 23 602 U1, DE 196 33 839 C2, EP 0 751 044 B1, EP 0 439 432 A1, EP 1 062 124 B1, WO 99/46147, EP 1 188 547 A1, DE 198 49 366 A1, DE 199 32 175 A1, DE 199 20 969 B4, DE 199 20 969 A1, EP 1 161 360 B1, WO 00/68039, DE 299 15 428 U1, DE 299 15 429 U1

Die Verwendung einer Vliesschicht zur Schallisolierung ist weiterhin aus DE 10 2007 036 952 A1 bekannt. Die hier beschriebene Schallisolierung umfasst eine Schaumstoffschicht und eine Sperrschicht (Absorptionsvlies), die dadurch gekennzeichnet ist, dass sich zwischen der Schaumstoffschicht und der Sperrschicht voll- oder teilflächig eine gegebenenfalls mikroperforierte Vliesschicht, eine mikroperforierte Folie oder ein mikroperforiertes Folienvlies befindet.

An Stelle einer Vliesschicht kann ein Schallabsorber auch eine Schaumstoffschicht aufweisen. Dies ist beispielsweise in DE 100 22 902 A1 beschrieben. Das hier beschriebene Verkleidungs- oder Formelement für Verkehrsmittel umfasst wenigstens einen mikrogelochten Folienabsorber, wenigstens einen Schaumstoff- und/oder Vliesabsorber und/oder Luftspalt in räumlichen Abstand zu einer schallharten Wand.

Diese Bauteile können hinsichtlich der maximalen Absorption für die entsprechende Frequenz optimiert werden.
Wie für Absorber bekannt ist, liegt bei entsprechender hoher Absorption eine geringe Isolation vor. Dabei zeigt sich speziell im technisch interessanten Frequenzbereich von 500 - 2500 Hz eine geringe Absorption. In dem Maße, wie durch Aufbringen der Masse die Isolation angehoben wird, verringert sich die Absorption.
Verbunden ist häufig damit, dass ein zusätzliches Werkzeug zum Formen der zusätzlichen Masse benötigt wird und damit natürlich auch die Bauteilkosten steigen.
Dabei sind nahezu alle Bauteile konturgetreu zur Karosse und bedürfen damit schon hohe Werkzeugkosten.

Aufgabe der vorliegenden Erfindung ist die Bereitstellung eines Schallabsorbers der die zuvor genannten Nachteile aus dem Stand der Technik vermeidet.

So soll der erfindungsgemäße Absorber hinsichtlich seiner maximalen Absorption frequenzmäßig einstellbar sein.
Ohne wesentliche Verluste an Absorption sollte eine Isolation erreicht werden, die nahezu den Wert von Feder - Masse - Systemen erreicht.

Gegenüber konventionellen Systemen sollte er ein geringes Gewicht besitzen, sehr kostengünstig hergestellt werden können, recyclingfähig sein sowie selbst Recyclingmaterial beinhalten.

Gelöst wird die vorliegende Erfindung durch einen breitbandigen Schallabsorber 1 mit hoher akustischer Isolation, umfassend ein Schwerfüllstoff Massebelegung) enthaltendes schallabsorbierendes Fasern enthaltendes Füllstoffmaterial zwischen zwei sich randumlaufend berührenden miteinander verbundenen Folienbahnen (2) mit vollständiger oder bereichsweiser Mikroperforierung (4), wobei eine oder beide mikroperforierten Folienbahnen über die Fläche eine gleiche Dicke oder partielle Aufdickungen aus gleichem oder unterschiedlichem Material wie die Folienbahnen aufweisen, wobei das Füllstoffmaterial zwischen den beiden Folienbahnen (2) über die Fläche des Absorbers hinweg unterschiedliche Zusammensetzung, unterschiedliche Dicke, Gewichte und/oder Dichten aufweist,
wobei der Schwerfüllstoff hochgefüllte thermoplastische oder duroplastischen Kunststoffe, ausgewählt aus PE, PP, EVA und/oder deren Copolymere als auch PUR- und EP-Harze allein oder im Gemisch, gefüllt mit mineralischen Partikeln, ausgewählt aus Kreide, Schwerspat, Sedimentgestein, Silikaten und/oder Magnetit enthält, und
die Fasern ausgewählt sind aus Kunststofffasern; pflanzlichen Fasern; tierischen Fasern; anorganischen Fasern; Schaumstoffflocken, ausgewählt aus Polvurethanschaumflocken, Polyesterschaumflocken, und/oder Polvolefinschaumflocken; Federn; Hohlkörpern, ausgewählt aus Polyolefin, Glas; EPS, EPP, PEPP; Holzspänen; Holzmehl lose oder formgebunden als Platine, als Einzelmaterial und/oder Gemische aus zwei oder mehreren der Materialien.

Breitbandig im Sinne der vorliegenden Erfindung ist ein Schallabsorber 1, wenn die Absorption im Frequenzbereich von 400 bis 10.000Hz möglichst hoch ist.

Durch die Abstimmung der mikrogelochten Folienbahn 2 zum Füllmaterial wird eine frequenzmäßig abgestimmte Absorption erreicht. Neben der Wahl einer geeigneten Folienbahn 2 sowie deren kontrollierte Mikroperforierung 4 ist auch die Wahl des Füllstoffmaterials und des Schwerfüllstoffs entscheidend für die Qualität des Schallabsorbers 1. Durch die geeignete Kombination der einzelnen Bestandteile kann der erhaltene Schallabsorber 1 in seiner Frequenz den Gegebenheiten angepasst werden.

Hohe akustische Isolation im Sinne der vorliegenden Erfindung bedeutet eine gegenüber dem üblichen Füllmaterial in verpresster Form erhöhte Isolation über einen breiten Frequenzbereich.

Die mikroperforierten Folienbahnen berühren sich randumlaufend, wodurch ein Hohlraum entsteht. Dieser Hohlraum ist mit einem Füllstoffmaterial gefüllt, welches als Abstandshalter der beiden Folien 2 dient, oder vorzugsweise eine schallabsorbierende Wirkung hat. Als Füllstoffmaterial eignen sich alle Materialien, die einen Abstand der Folien erzeugen und möglichst zusätzlich noch Schall absorbieren, insbesondere Fasern, Schaumstoffflocken, Federn, Hohlkörper, expandierte Polymere, Holzspäne oder Holzmehl.

Als Fasern finden natürliche und synthetische Fasern Verwendung. Neben Kunststofffasern können auch pflanzliche, tierische oder anorganische Fasern eingesetzt werden. Zum Füllen des Hohlraumes zwischen den Folienbahnen 2 können beispielsweise Flocken aus Polyurethanschaum, Polyesterschaum und/oder Polyolefinschaum verwendet werden. Hohlkörper, ausgewählt aus Polyolefin oder Glas, eignen sich ebenso als Füllstoff wie Holzspäne oder Holzmehl, wobei letzteres lose oder formgebunden als Platine eingesetzt werden kann. Ebenso eignen sich EPS (Expanded Polystyrene), EPP (Expanded Polypropylene) oder PEPP (Porous Expanded Polypropylen) als Füllstoff. Die zuvor genannten Füllstoffmaterialien können als Einzelmaterial und/oder Gemische eingesetzt werden, wobei Gemische aus zwei oder mehreren Materialien verwendet werden können.

Das Füllstoffmaterial weist über die Fläche des Schallabsorbers 1 hinweg unterschiedliche Dicke, Gewichte, Zusammensetzung und/oder Dichten auf. Durch das gezielte Einbringen definierter Mengen des Füllstoffes an einzelnen Positionen kann der erfindungsgemäße Schallabsorber 1 hinsichtlich seiner Wirkung optimiert werden. Es können auch unterschiedliche Füllstoffmaterialien, insbesondere bei großflächigen oder großvolumigen Schallabsorbern, an bestimmten Flächen gezielt positioniert werden, so dass eine verbesserte Schallabsorption erreicht wird. Fläche im Sinne der vorliegenden Anmeldung ist hier nicht nur im Sinne der zweidimensionalen Ausdehnung zu verstehen. Es ist auch möglich, dass die Zusammensetzung des Füllstoffmaterials in Dicke, Gewichte und/oder Dichte in allen drei Raumrichtungen variiert.

Neben dem schallabsorbierenden Füllstoffmaterial umfasst der Schallabsorber 1 auch einen Schwerfüllstoff. Erfindungsgemäß enthält ein entsprechender Schwerfüllstoff hochgefüllte thermoplastische oder duroplastische Kunststoffe, ausgewählt aus PE (Polyethylen), PP (Polypropylen), EVA (Ethylvinylacetat) und/oder deren Copolymere allein oder im Gemisch, gefüllt mit mineralischen Partikeln ausgewählt aus Kreide, Schwerspat, Sedimentgestein, Silikaten und/oder Magnetit. Ein entsprechender Schwerfüllstoff dient als Massebelegung im Sinne eines Feder-Masse-Systems.

Die Massebelegung des Füllstoffmaterials kann über die Fläche hinweg unterschiedliche Gewichte aufweisen. Auch dies ermöglicht die bedarfsgerechte Verwendung der Schwerfüllstoffe. An besonders schallexponierten Positionen kann ein höheres Gewicht notwendig sein und erfindungsgemäß speziell an den entsprechenden Positionen auch eingebracht werden. Dies führt dann insgesamt zu einer Ersparnis an benötigtem Schwerfüllstoff und somit zu einer Reduktion der Herstellungskosten. Fläche im Sinne der vorliegenden Anmeldung ist auch hier nicht nur als zweidimensionale Ausdehnung zu verstehen. Es ist auch möglich, dass sich die Massebelegung des Füllstoffmaterials in allen drei Raumrichtungen unterscheidet.

Ein erfindungsgemäßer Schallabsorber 1 ist in seinem Gesamtgewicht leicht, da die Massebelegung gezielt an den benötigten Stellen erhöht werden kann. Bereiche, in denen die Massebelegung geringer gehalten werden kann, weisen dann auch eine geringere Massebelegung des Füllstoffes auf. Das geringere Gewicht ermöglicht zum einen eine einfachere Handhabbarkeit im Einbau, zum anderen wird das Gesamtgewicht des entsprechend schallgedämmten Kraftfahrzeugs geringgehalten und damit dessen Energieverbrauch gesenkt.

Durch das gezielte Einbringen und Positionieren von Füllstoff und Massebelegung können die entsprechenden Rohstoffe eingespart werden. Hierdurch können die Produktionskosten geringgehalten werden, ohne die Qualität der Schalldämmung zu beeinträchtigen.

In einem erfindungsgemäßen Schallabsorber 1 beträgt die Massebelegung des schallabsorbierenden Füllstoffmaterials 0,2 kg/m² bis 8 kg/m², insbesondere 0,5 kg/m² bis 3 kg/m². Es hat sich gezeigt, dass eine solche Massebelegung des schallabsorbierenden Füllstoffmaterials eine ausreichende Schallabsorption sicherstellt; gleichzeitig kann das Gewicht geringgehalten werden. Liegt die Massebelegung des Füllstoffmaterials unter 0,2 kg/m², so kann eine ausreichende Schallisolation nicht sichergestellt werden. Überschreitet die Massebelegung des Füllstoffmaterials jedoch 8 kg/m², so wird das Gesamtgewicht des Absorbers hoch, ohne dass eine Verbesserung der Absorptionsleistung eintritt. Besonders gute Ergebnisse werden mit einer Massebelegung im Bereich von 0,5 kg/m² bis 3 kg/m² erzielt. Hier erreicht man eine sehr gute Schallabsorption bei gleichzeitig geringem Gewicht des Schallabsorbers.

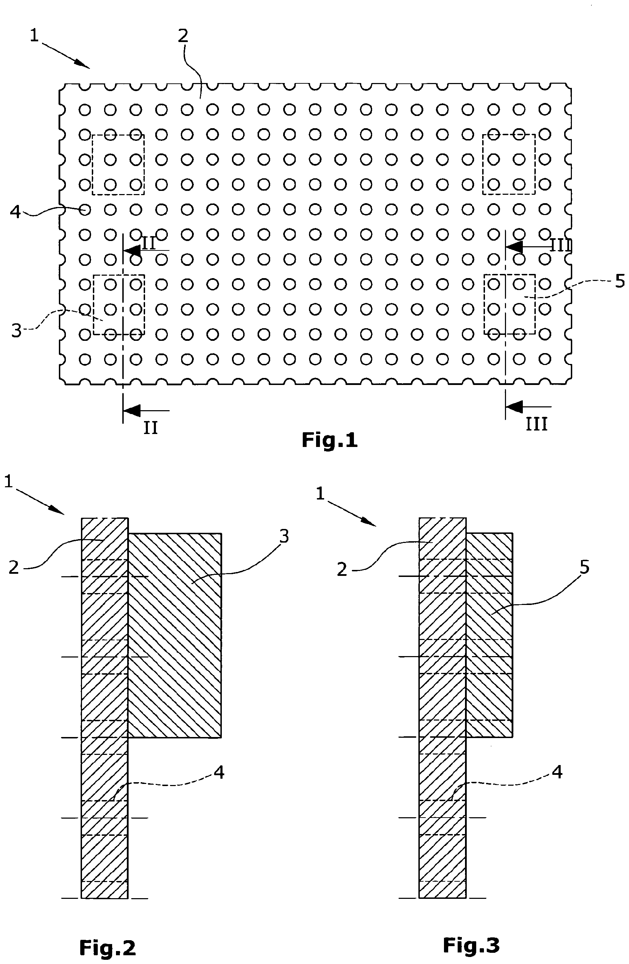

Die mikroperforierten Folienbahnen 2 beeinflussen durch definierte Lochungen den Strömungswiderstand. Eine oder beide mikroperforierte Folienbahnen 2 können über die gesamte Fläche hinweg eine gleiche Dicke aufweisen. Somit wird eine homogene Strömung und Schallabsorption über die gesamte Fläche erreicht. Um den erfindungsgemäßen Schallabsorber an bestimmte Gegebenheiten anzupassen, ist es jedoch möglich, dass die Folienbahnen 2 partielle Aufdickungen 3,5 aufweisen, wie dies in der Fig. 1 bis 3 dargestellt ist. Diese können aus dem gleichen oder auch aus einem anderen Material wie das Folienmaterial bestehen. Solche Aufdickungen 3,5 finden sich bevorzugt an solchen Stellen, an denen verstärkt Schall auftritt und somit eine erhöhte Schallisolation notwendig ist. Die Aufdickungen 3 der Fig. 2 bestehen aus nicht perforiertem Material, insbesondere der gleichen chemischen Zusammensetzung wie die Folienbahn 2. Die Dicke der Aufdickungen 3,5 kann hier ebenfalls, wie in der nachfolgenden Fig. 3 dargestellt, in Abhängigkeit von den Gegebenheiten eingestellt werden. Eine Möglichkeit der Herstellung von Aufdickungen besteht in dem Verkleben von Folienbahn 2 einerseits und Aufdickung andererseits mit oder ohne Klebstoff zwischen beiden.

Wird die Mikrolochung erst nach dem Verbinden der Folienbahn 2 und der Aufdickung 3 vorgenommen, so ist die Mikroperforierung 4 durchgängig und einfach herstellbar. Die Aufdickungen 3,5 können somit beispielsweise aus dem gleichen mikroperforierten Material wie die Folienbahn 2 bestehen, wie dies in Fig. 3 dargestellt ist.

Die beiden mikroperforierten Folienbahnen, welche sich randumlaufend berühren, können dabei aus dem gleichen Material und/oder Werkstoff bestehen. Ebenso können sie unterschiedliche Materialien und/oder Werkstoffe aufweisen.

Die Folienbahnen 2 selbst umfassen einen oder mehrere Kunststoffe, ein- oder mehrlagige Kunststoffe und/oder Papier, wobei zweilagige Kunststoffe bevorzugt sind. Daneben können auch Metallfolien oder metallisierte Folien Verwendung finden.

Die sich randumlaufend berührenden Folienbahnen 2 weisen erfindungsgemäß eine Mikroperforierung 4 auf. Um die Vorteile der Mikroperforierung 4, wie sie im Stand der Technik beschrieben ist, im Sinne der Schallabsorption auszunutzen, weist die Mikroperforierung 4 der Folienbahnen 2 einen oder mehrere Durchmesser im Bereich von 0,05 mm bis 2,5 mm, insbesondere im Bereich von 0,1 mm bis 1,8 mm auf. Die Gesamtlochfläche der Folienbahnen 2 liegt im Bereich von 0,1 % bis 15 %, insbesondere 0,2 % bis 7 %.

Liegt der Durchmesser unter 0,05 mm, dann wird die Absorption in Abhängigkeit vom Lochanteil zu gering. Überschreitet der Durchmesser der Perforierung jedoch einen Wert von 2,5 mm dann verschwindet der Vorteil der Mikroperforierung 4. Insbesondere liegen die Durchmesser im Bereich von 0,1 mm bis 1,8 mm. Hier werden besonders gute Ergebnisse bei der Schallabsorption erreicht.

Weiterhin ist zu berücksichtigen, dass die Gesamtlochfläche der Folienbahnen 2 einen Wert von 15 % nicht überschreitet. Bei einer Gesamtlochfläche von > 15 % verschwindet der Vorteil der Mikroperforierung. Die Gesamtlochfläche darf jedoch 0,1 % nicht unterschreiten, da bei einem geringeren Wert die Folienbahn quasi geschlossen ist und die Absorption zu gering wird. Bei einer Gesamtlochfläche der Folienbahnen im Bereich von 0,2 % bis 7 % werden besonders gute Absorptionswerte erzielt.

Besonderheiten in der Mikrolochung 4 ergeben sich insbesondere an den Stellen, an denen die Folienbahnen eine Aufdickung 3,5 und/oder Massebelegung 3,5 aufweisen. In diesen Bereichen weisen die Folienbahnen vorzugsweise keine Mikrolochung 4 (zur reinen Dämmungserhöhung) auf. Wird ein zweites Material auf die mikrogelochte Folie 2 aufgebracht, hat dies eine Lochung 4 (Dämmung mit Absorption) mit einem oder mehreren Durchmessern im Bereich von mehr als 2,5 mm bis 50 mm, insbesondere von 5 mm bis 20 mm auf. Liegt der Durchmesser der Perforierung 4 im Bereich der Aufdickung unter 2,5 mm, dann wird die Anbindung des Absorbers 1 zu gering und der Gesamtaufbau wirkt zu wenig absorptiv. Überschreitet der Durchmesser der Perforierung 4 jedoch einen Wert von 50 mm dann verliert die Aufdickung 3, 5 in Abhängigkeit von der Lochdichte zu sehr an Masse und der gewünschte Effekt (zusätzliche Dämmung) stellt sich nicht mehr ein. Insbesondere liegen die Durchmesser der Löcher im Bereich der Aufdickung 3, 5 im Bereich von 5 mm bis 20 mm. Hier werden besonders gute Ergebnisse im Sinne der Schallabsorption erreicht.

Im Bereich der Aufdickungen 3, 5 und/oder Massebelegung 3, 5 beträgt die Lochfläche 0,1 bis 30 %, insbesondere 0,2 % bis 10 %.

Bezüglich der Absorption soll die Gesamtlochfläche der Folienbahnen 2 im Bereich der Aufdickungen 3, 5 und/oder Massebelegungen 3, 5 einen Wert von 30 % nicht überschreiten. Bei einer Gesamtlochfläche von > 30 % in diesen Bereichen wird der Dämmungseffekt der Aufdickung 3, 5 verschwindend gering. Die Gesamtlochfläche darf hier jedoch 0,1 % nicht unterschreiten, da bei einem geringeren Wert die Absorption zu stark eingeschränkt wird. Bei einer Gesamtlochfläche der Folienbahnen 2 im Bereich der Aufdickungen 3, 5 und/oder Massebelegungen 3, 5 zwischen 0,2 % und 10 % werden besonders gute Absorptionswerte erzielt.

Insbesondere bei Schallabsorbern 1 mit einer großen räumlichen Ausdehnung kann es zum Verrutschen des Füllmaterials innerhalb des Absorbers kommen. Um dies zu vermeiden, werden die zwei Folienbahnen 2 vorzugsweise durch Kammern und/oder Abtrennungen bildende (Verstärkungs-)Stege außerhalb des Randbereiches miteinander verbunden. Durch die Stege bilden sich einzelne Kammern, in welchen das Füllmaterial an der benötigten Position gehalten wird. Weiterhin dienen die Stege zur Verstärkung des gesamten Absorbers.

Zur Bildung des Schallabsorbers 1 müssen die beiden Folienbahnen randumlaufend miteinander verbunden sein. Die Verbindungsnaht darf sich auch unter erhöhten oder erniedrigten Temperaturen, wie sie im Betrieb unter Umständen vorkommen, nicht lösen. Die Verbindung muss ein sicheres Einschließen des Füllstoffes sowie der Massebelegung sicherstellen. Die Folienbahnen 2 können miteinander verschweißt, verklammert, verklebt, geknöpft, genäht, getackert, vernietet oder auf andere im Stand der Technik bekannte Art und Weise randumlaufend miteinander verbunden werden.

Durch Wahl und Menge des Füllstoffes sowie durch Variation des Folienbahnmaterials 2 ist eine bedarfsorientierte Masseverteilung möglich. Ein erfindungsgemäßer Schallabsorber 1 kann somit jegliche aus dem Stand der Technik bekannte Absorber ersetzen.

Zum Einsatz kommen kann dieses System beispielsweise in den Kavitäten von Fahrzeugen als Stirnwandisolation zwischen Instrumententafel und Stirnwandblech, in Säulen, hinter Verkleidungsteilen, im Motorraum oder als Dachhimmel. Die Einsatzmöglichkeit beschränkt sich jedoch nicht nur auf Fahrzeuge. Vielmehr ist das mögliche Einsatzgebiet variabel. Überall, wo absorbierende und isolierende Systeme benötigt werden, kann ein erfindungsgemäßer Absorber 1 eingesetzt werden, beispielsweise in der Luft- und Raumfahrt, in der Schifffahrt, bei der Herstellung Weißer Ware, im Anlagenbau, in der Bauakustik oder ähnlichen Bereichen.

Ein erfindungsgemäßer Schallabsorber 1 ist von seinem Aufbau her flexibel und kann somit dreidimensional an vorhandene Strukturen angepasst werden. Ein Verformungsprozess ist nicht erforderlich. Weiterhin kann ein solcher Schallabsorber 1 recycelt werden. Das Füllmaterial kann bei der Herstellung eines neuen Schallabsorbers 1 wiederverwendet werden. Hierdurch werden die Herstellungskosten nochmals reduziert.

Eine besondere Erhöhung der Wirkungsweise kann in Kavitäten sowie in Kombination mit einem Wandabstand erreicht werden. Ein entsprechender Wandabstand beeinflusst bekanntermaßen das Schallabsorptionsvermögen.

Das folgende Ausführungsbeispiel zeigt exemplarisch eine Möglichkeit zur Herstellung eines erfindungsgemäßen Schallabsorbers.

### Ausführungsbeispiel:

Zwischen zwei handelsüblichen mikroperforierten PE/PA-Folienbahnen 2 mit einer effektiven Fläche von 1,2 m² und gleicher Dicke (100 µm, 240 E/cm², Loch-Durchmesser ca. 0,14 mm, Lochflächenanteil ca. 3,4%) wurden Recycling-Baumwoll-/PET-Mischfasern (960 g) mit einem Flächengewicht von 800 g/m² gleichmäßig verteilt.
Randumlaufend wurden die rechteckigen Folienbahnen ultraschallverschweisst; sowie auch innerhalb des Randbereiches, nämlich mit einer Naht mittig zwischen den beiden Schmalseiten und mit je einer Naht jeweils bei einem bzw. zwei Dritteln zwischen den Längsseiten.

Durch die Verschweißung innerhalb des Randbereiches bilden sich sechs einzelne Kammern, in welchen das Füllmaterial anforderungsspezifisch und verrutschsicher positioniert wird. Durch die Verschweißungsstege erhält der Absorber eine Eigenstabilität.

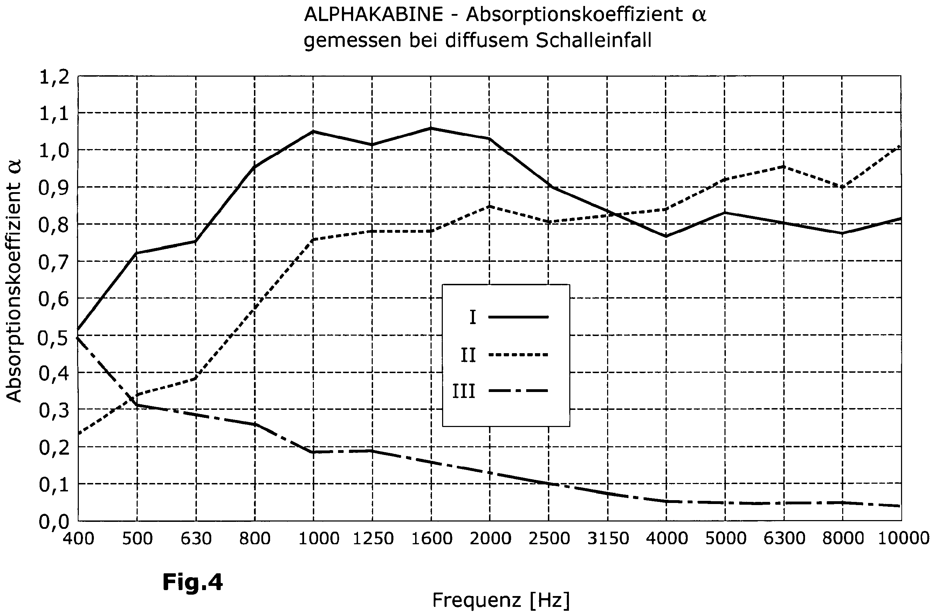

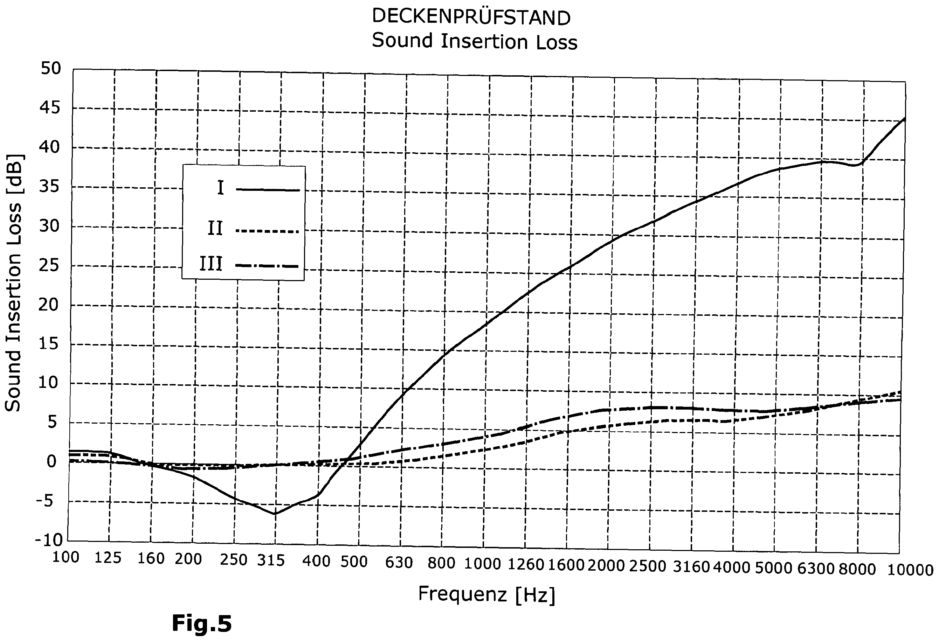

Fig. 4 und 5 zeigen einen Vergleich eines erfindungsgemäßen Absorbers (I) mit einer Füllung einer Dicke von 20mm, entsprechend eines Bauteilgewichts von 917 g/m² zu einem entsprechenden Absorber (II) desselben Materials wie der Füllstoff in einer Dicke von 18 mm und ein Flächengewicht von 958 g/m² und eines Feder-Masse-Systems (III) des selben Füllstoffmaterials mit einer handelsüblichen Schwerfolie bei einer Gesamtdicke von 19 mm und einem Flächengewicht von 2.600 g/m².

Der Absorptionskoeffizient des erfindungsgemäßen Absorbers 1 ist der Vergleichsabsorber im Bereich unterhalb 3.000 Hz deutlich überlegen.

## Patentansprüche

1. Breitbandiger Schall-Absorber (1) mit hoher akustischer Isolation, umfassend ein Schwerfüllstoff (Massebelegung) enthaltendes schallabsorbierendes Fasern enthaltendes Füllstoffmaterial zwischen zwei sich randumlaufend berührenden miteinander verbundenen Folienbahnen (2) mit vollständiger oder bereichsweiser Mikroperforierung (4), wobei eine oder beide mikroperforierten Folienbahnen über die Fläche eine gleiche Dicke oder partielle Aufdickungen aus gleichem oder unterschiedlichem Material wie die Folienbahnen aufweisen, wobei das Füllstoffmaterial zwischen den beiden Folienbahnen (2) über die Fläche des Absorbers hinweg unterschiedliche Zusammensetzung, unterschiedliche Dicke, Gewichte und/oder Dichten aufweist,
wobei der Schwerfüllstoff hochgefüllte thermoplastische oder duroplastischen Kunststoffe, ausgewählt aus PE, PP, EVA und/oder deren Copolymere als auch PUR- und EP-Harze allein oder im Gemisch, gefüllt mit mineralischen Partikeln, ausgewählt aus Kreide, Schwerspat, Sedimentgestein, Silikaten und/oder Magnetit enthält, und
die Fasern ausgewählt sind aus Kunststofffasern; pflanzlichen Fasern; tierischen Fasern; anorganischen Fasern; Schaumstoffflocken, ausgewählt aus Polyurethanschaumflocken, Polyesterschaumflocken, und/oder Polyolefinschaumflocken; Federn; Hohlkörpern, ausgewählt aus Polyolefin, Glas; EPS, EPP, PEPP; Holzspänen; Holzmehl lose oder formgebunden als Platine, als Einzelmaterial und/oder Gemische aus zwei oder mehreren der Materialien.

2. Absorber (1) nach Anspruch 1, **dadurch gekennzeichnet, dass** die Massebelegung des Füllstoffmaterials über die Fläche hinweg unterschiedliche Gewichte aufweist.

3. Absorber (1) nach Anspruch 1 oder 2, **dadurch gekennzeichnet, dass** die Massebelegung des schallabsorbierenden Füllstoffmaterials 0,2 kg/m² bis 8 kg/m², insbesondere 0,5 kg/m² bis 3 kg/m² beträgt.

4. Absorber (1) nach einem der Ansprüche 1 bis 43, **dadurch gekennzeichnet, dass** die Folienbahnen (2) einen oder mehrere Kunststoffe, ein- oder mehrlagige Kunststoffe, Metall, metallisierte Kunststofffolie, Keramik, und/oder Papier, insbesondere zweilagige Kunststoffe umfassen.

5. Absorber (1) nach einem der Ansprüche 1 bis 4, **dadurch gekennzeichnet, dass** die zwei Folienbahnen (2) gleiche oder unterschiedliche Materialien und/oder Werkstoffe aufweisen.

6. Absorber (1) nach einem der Ansprüche 1 bis 65, **dadurch gekennzeichnet, dass** die Mikroperforierungen (4) der Folienbahnen (2) einen oder mehrere Durchmesser im Bereich von 0,05 mm bis 2,5 mm, insbesondere im Bereich von 0,1 mm bis 1,8 mm aufweisen.

7. Absorber (1) nach einem der Ansprüche 1 bis 6, **dadurch gekennzeichnet, dass** die Lochfläche der Folienbahnen 0,1% bis 15%, insbesondere 0,2% bis 7% beträgt.

8. Absorber (1) nach einem der Ansprüche 1 bis 87, **dadurch gekennzeichnet, dass** die Folienbahnen (2) im Bereich von Aufdickungen und/oder Massebelegungen die gleiche Mikrolochung wie in der Folie oder keine Mikrolochung aufweisen.

9. Absorber (1) nach einem der Ansprüche 1 bis 98, **dadurch gekennzeichnet, dass** die Aufdickungen (3,5) und/oder Massebelegungen eine Lochung (4) mit einem oder mehreren Durchmessern im Bereich von mehr als 2,5 mm bis 50 mm, insbesondere von 5 mm bis 20 mm aufweisen.

10. Absorber (1) nach einem der Ansprüche 1 bis 9, **dadurch gekennzeichnet, dass** die Lochfläche im Bereich der Aufdickungen (3,5) und/oder Massebelegung 0,1% bis 30%, insbesondere 0,2% bis 10% beträgt.

11. Absorber (1) nach einem der Ansprüche 1 bis 10, **dadurch gekennzeichnet, dass** die randumlaufende Verbindung der zwei Folienbahnen (2) verschweißt, verklammert, verklebt, geknöpft, genäht, getackert oder vernietet ist.

12. Absorber (1) nach einem der Ansprüche 1 bis 11, **dadurch gekennzeichnet, dass** die zwei Folienbahnen (2) innerhalb des Randbereiches partiell durch Verschweißen, Verkleben, Verklammern, Verknöpfen, Vernähen, Vertackern oder Vernieten verbunden sind.

## Claims

1. A broadband sound absorber (1) with a high acoustic insulation, comprising a sound-absorbing filler material containing fibers, which contains a heavy filler (mass component), between two sheets (2) in complete circumferential contact having a complete or area-dependent microperforation (4), wherein one or both microperforated sheets have the same thickness throughout their area or partial swellings consisting of a material which is the same as or different from that of the sheet, wherein said filler material has different compositions, different thicknesses, weights and/or densities over the area of the absorber between the two sheets (2),
wherein said heavy filler contains highly filled thermoplastic or thermoset plastic materials selected from PE, PP, EVA, and/or copolymers thereof as well as PUR and EP resins alone or in admixture, filled with mineral particles selected from chalk, baryte, sedimentary rock, silicates, and/or magnetite, and
said fibers are selected from plastic fibers; plant fibers; animal fibers; inorganic fibers; foam flakes selected from polyurethane foam flakes, polyester foam flakes and/or polyolefin foam flakes; feathers; hollow bodies selected from polyolefin, glass; EPS, EPP, PEPP; wood shavings; wood flour in a loose form or shaped as a board, as individual materials and/or blends of two or more of the materials.

2. The absorber (1) according to claim 1, **characterized in that** the mass component of the filler material has different weights over the area.

3. The absorber (1) according to claim 1 or 2, **characterized in that** the mass per unit area of the sound-absorbing filler material is from 0.2 kg/m² to 8 kg/m², especially from 0.5 kg/m² to 3 kg/m².

4. The absorber (1) according to any of claims 1 to 3, **characterized in that** said sheets (2) include one or more plastic materials, one-ply or multiply plastic materials, metal, metalized plastic films, ceramics, and/or paper, especially two-ply plastic materials.

5. The absorber (1) according to any of claims 1 to 4, **characterized in that** the two sheets (2) are made of the same or different materials.

6. The absorber (1) according to any of claims 1 to 5, **characterized in that** the microperforations (4) of the sheets (2) have one or more diameters within a range of from 0.05 mm to 2.5 mm, especially within a range of from 0.1 mm to 1.8 mm.

7. The absorber (1) according to any of claims 1 to 6, **characterized in that** the perforation area of the sheets is from 0.1% to 15%, especially from 0.2% to 7%.

8. The absorber (1) according to any of claims 1 to 7, **characterized in that** said sheets (2) have the same microperforation as in the sheet or no microperforation in the region of swellings and/or mass components.

9. The absorber (1) according to any of claims 1 to 8, **characterized in that** said swellings (3, 5) and/or mass components have a perforation (4) with one or more diameters within a range of from more than 2.5 mm to 50 mm, especially from 5 mm to 20 mm.

10. The absorber (1) according to any of claims 1 to 9, **characterized in that** the perforation area in the region of the swellings (3, 5) and/or mass components is from 0.1 to 30%, especially from 0.2% to 10%.

11. The absorber (1) according to any of claims 1 to 10, **characterized in that** said complete circumferential bonding between the two sheets (2) is achieved by welding, clamping, adhesive bonding, buttoning, sewing, stapling or riveting.

12. The absorber (1) according to any of claims 1 to 11, **characterized in that** the two sheets (2) are partially bonded together inside the peripheral zone by welding, adhesive bonding, clamping, buttoning, sewing, stapling or riveting.

## Revendications

1. Absorbeur de son à large bande (1) avec une haute isolation acoustique, comprenant une matière de remplissage d'absorption acoustique contenant des fibres, qui contient une charge lourde (composant massique), entre deux bandes de feuille (2) se touchant circonférentiellement reliées entre elles avec une microperforation (4) entière ou partielle, dans lequel une ou les deux bandes de feuille microperforées présentent une épaisseur constante sur toute la surface ou des épaississements partiels en un matériau identique avec ou différent de celui des bandes de feuille, dans lequel la matière de remplissage présente une composition différente, épaisseurs, poids et/ou densités différents entre les deux bandes de feuille (2) et sur toute la surface de l'absorbeur,
dans lequel la charge lourde contient des matières thermoplastiques ou plastiques thermodurcissables à haute charge choisis parmi PE, PP, EVA et/ou des copolymères de ceux-ci ainsi que des résines PUR et EP seules ou en mélange, chargés de particules minérales choisies parmi la craie, la barytine, la roche sédimentaire, des silicates et/ou la magnétite, et
les fibres sont choisies parmi des fibres synthétiques ; des fibres végétales ; des fibres animales ; des fibres inorganiques ; des flocons de mousse choisis parmi les flocons de mousse polyuréthane, les flocons de mousse polyester et/ou les flocons de mousse polyoléfine ; des plumes ; des corps creux choisis parmi polyoléfine, verre ; EPS, EPP, PEPP ; copeaux ; sciure lâche ou mise en forme en tant que plaque, matériau singulier et/ou mélanges de deux ou plusieurs des matériaux.

2. Absorbeur (1) selon la revendication 1, **caractérisé en ce que** le composant massique de la matière de remplissage présente des poids différents sur toute la surface.

3. Absorbeur (1) selon la revendication 1 ou 2, **caractérisé en ce que** la masse surfacique de la matière de remplissage d'absorption acoustique est de 0,2 kg/m² à 8 kg/m², notamment de 0,5 kg/m² à 3 kg/m².

4. Absorbeur (1) selon l'une quelconque des revendications 1 à 3, **caractérisé en ce que** les bandes de feuille (2) comprennent une ou plusieurs matières plastiques, des matières plastiques à une ou plusieurs couches, un métal, une feuille de plastique métallisée, céramique et/ou papier, notamment des matières plastiques à deux couches.

5. Absorbeur (1) selon l'une quelconque des revendications 1 à 4, **caractérisé en ce que** les deux bandes de feuille (2) présentent des matériaux identiques ou différents.

6. Absorbeur (1) selon l'une quelconque des revendications 1 à 5, **caractérisé en ce que** les microperforations (4) des bandes de feuille (2) présentent un ou plusieurs diamètres compris entre 0,05 mm et 2,5 mm, notamment compris entre 0,1 mm et 1,8 mm.

7. Absorbeur (1) selon l'une quelconque des revendications 1 à 6, **caractérisé en ce que** le pourcentage d'aire des perforations des bandes de feuille est de 0,1 % à 15 %, notamment de 0,2 % à 7 %.

8. Absorbeur (1) selon l'une quelconque des revendications 1 à 7, **caractérisé en ce que** les bandes de feuille (2) présentent la même microperforation que la feuille ou aucune microperforation dans la région des épaississements et/ou des composants massiques.

9. Absorbeur (1) selon l'une quelconque des revendications 1 à 8, **caractérisé en ce que** les épaississements (3, 5) et/ou les composants massiques présentent une perforation (4) avec un ou plusieurs diamètres compris entre plus de 2,5 mm et 50 mm, notamment entre 5 mm et 20 mm.

10. Absorbeur (1) selon l'une quelconque des revendications 1 à 9, **caractérisé en ce que** le pourcentage d'aire des perforations est de 0,1 % à 30 %, notamment de 0,2 % à 10 %, dans la région des épaississements (3, 5) et/ou des composants massiques.

11. Absorbeur (1) selon l'une quelconque des revendications 1 à 10, **caractérisé en ce que** la connexion circonférentielle des deux bandes de feuille (2) est soudée, agrafée, collée, boutonnée, cousue, fixée par une agrafeuse ou rivetée.

12. Absorbeur (1) selon l'une quelconque des revendications 1 à 11, **caractérisé en ce que** les deux bandes de feuille (2) sont partiellement reliées entre elles par soudure, collage, agrafage, boutonnage, couture, fixation par une agrafeuse ou rivetage au sein de la zone marginale.
